# EUROPEAN PATENT SPECIFICATION

(11) **EP 2 135 825 B1**
(45) Date of publication and mention of the grant of the patent: **16.05.2012**
(21) Application number: 08158409.6
(22) Date of filing: 17.06.2008
(51) Int. Cl.: B65G 47/68, B65G 47/84, B65G 47/244

(54) **Method for aligning tissue clips, and apparatus and system therefore**
Verfahren, Vorrichtung und System zur Ausrichtung von Papiertaschentuchpackstücken
Méthode, appareil et système pour l'alignement de paquets de mouchoirs

(43) Date of publication of application: 23.12.2009
(73) Proprietor: Langenpac B.V., 6604 BV Wijchen (NL)
(72) Inventor: Rovers, Theodorus Johannus Gerardus Maria, 5846 AG Ledeacker (NL)
(74) Representative: van Westenbrugge, Andries

(56) References cited:
- EP-A- 1 801 014
- WO-A-2006/002156
- US-A- 2 829 757

## Description

The invention relates to a method for aligning tissue clips according to the preamble of claim 1. The invention further relates to an apparatus for aligning tissue clips according to the preamble of claim 7.

The invention also relates to a system for aligning and packing tissue clips into carton boxes according to the preamble of claim 10.

Tissues may be packaged into tissue cartons using tissue cartoning machines. In these machines, stacks of tissues, known as clips, are supplied and transported to the tissue cartons by conveyors. The tissue clips are carefully aligned in order to easily pack them into the cartons. The cartons are moved adjacent the conveyor in phased relationship with the clips. The tissue clips may then be placed inside the cartons by pushing the clips into the cartons. A tissue clip is a stack of rectangular tissues having a short side and a long side.

Tissue cartons are available in either regular cartons or boutique cartons. When regular cartons are filled, tissue clips are pushed lengthwise into the carton through an open end of the carton. Thus, it is necessary for regular tissue clips to be orientated on the conveyor with their long side leading. By contrast, when boutique cartons are filled, the clips are bent into a U-shape, around an axis that is parallel to the short side of the clip. The clips are then pushed sideways into an open-sided boutique carton. For this method, the boutique tissue clips need to be oriented on the conveyor with their short side leading, to be able to bent the clips and push them into the cartons.

EP 1.801.014 in name of applicant discloses a method for aligning tissue clips according to the preamble of claim 1. In this document is disclosed a cartoning machine which can handle both flat and boutique configured clips. The cartoning machine comprises a conveyor for transporting the tissue clips inside movable buckets. Alongside the conveyor, a number of pushers are mounted on chains. In cooperation with a rounded wall on the bucket, the pushers are used to change the orientation of the clips on the conveyor from a short side leading, to a long side leading.

It is a drawback of the aforementioned apparatus and method, that the amount of tissue clips per time unit that may be packed into tissue cartons is relatively low, especially when packing boutique configured clips.

It is another drawback of the aforementioned apparatus and method, that the speed by which tissue clips may be transported, is limited. This is mostly due to the fact that the speed by which tissue clips can be transported is limited. A speed that is too high leads to air flow over the tissue clips, and subsequent suction forces on the top tissue sheets. This will result in tissue sheets being blown away from the clips. Thus, the speed of the tissue clips is limited to maintain production standards, resulting in a limitation in the number of tissue clips that may be cartoned per time unit. Document WO2006/002156 A1 discloses an apparatus according to the preambles of claims 7 and 10.
This document describes a transfer unit which combines the products fed from two input lines towards one output line.
This transfer unit comprises pushers, which can translate the products and rotate them. Nevertheless, the pushers of this apparatus need a complex command system for controlling the translation and/or rotation of the products, since more than one pusher is needed for achieving the movement of a product.

It is therefore an object of the present invention to provide a method, an apparatus and a system for cartoning tissue clips, wherein at least one of the aforementioned drawbacks have been resolved. It is preferred to provide improvement to prior a method and apparatus.

Hereto, the present invention provides a method for aligning tissue clips, wherein the method comprises supplying clips from a second supply. By supplying clips using a second supply, the total amount of clips supplied may be increased, without increasing the actual speed of the clips. Therefore, the unwanted result of papers at the top of the clips being blown away is prevented. It is possible that a space is provided in between the clips supplied from the first supply. With this, it is possible to control the total amount of clips per time unit being supplied. The clips supplied from the second supply may be transferred at least partially into the space between the clips supplied from the first supply. In other words, the two supplies are combined, and in essence a single line of clips is formed. Finally, the single line of clips may be transported towards an outlet. Preferably the speed of the first and second supply lines is maximized. The clips may be transported from the outlet in a long side leading position, in order to pack them into cartons.

With the method according to the invention, it is possible to control the distance between two clips being transported subsequently to the outlet with their long side leading. The distance between clips (an intermediate space or gap) may be relatively small, such that the space available is optimally used, and the amount of clips processed and packed per time unit is relatively high. The space between clips may also be varied, in order to control the amount of clips supplied per time unit to the cartoning machine. It is preferred to 'zip' the supplied clips from two supplies together into one outlet line. The invention comprises a number of different techniques to increase the density of clips in the outlet line with respect to the supply lines.

According to the invention, the clips have a long side and a short side. The clips from the first and/or the second supply are supplied with their short side leading. Before being processed, the clips are cut into the desired size. Most often, clips are cut such that they have a long side and a short side. It is possible that the length of the long side is more than twice the length of the short side. In existing cutting machines, the clips are provided to the cartoning machine with their short side leading. By using the method according to the present invention, it is possible to adapt current processes for packing clips in a relatively easy way.

The clips are moved into a long side leading position. This step may be performed for example by rotating the clips supplied, in a manner that is known to those skilled in the art. However, it is also possible that clips are supplied onto a conveyor that is placed perpendicular to the supply direction. In this way the clip is automatically moved into a long side leading position. When moving the clips into a long side leading position, it is possible to simultaneously increase the space or gap between clips consecutively supplied. When the clips are rotated from a short side leading position to a long side leading position, this increase in space occurs almost automatically. By rotating the clips, the pitch of the clips is preferably maintained, i.e. the distance between the leading edges of the clips remains unchanged. The transport speed of the clips is generally kept constant.

According to an embodiment the clips are transported from the supply line onto a conveyor. The conveyor will have transport speed. The conveying speed determines the space between clips consecutively supplied. This provides an option of controlling the space between consecutive clips. Preferably the supply line speed and conveyor speed are similar. Preferably rotating is performed while the clips are being supported and moving at the supply speed.

In an embodiment, rotating the clips comprises pushing the clips generally sideways to the supply direction. In this way, a simultaneous pushing and rotating action is obtained. Such a mechanism is known from EP 1 801 014 incorporated by reference.

According to an embodiment of the invention, the single line of clips has a transfer rate in between 330 and 440 clips/min, and more preferably equal to approximately 375 clips/min. With conventional methods, a transfer rate of approximately 240 clips/min is achievable, when tissue clips are in a long side leading position. Therefore, with the method according to the invention, it is possible to almost double the transfer rates, without the clips being susceptible to wind.

In an embodiment, the supply of the clips from the first supply is in antiphase with the supply of the clips from the second supply. In other words, it is possible that a clip is supplied from the first supply, and then a clip is supplied from the second supply. The clips supplied are then formed into a single line, wherein the line consists of clips alternately supplied from the first and second supply. By supplying clips in antiphase, it is relatively easy to supply a space between two successive clips being supplied from the first supply. Besides this, with the method it is relatively easy to position a clip supplied from the second supply, in order to transfer said clip at least partially into the space between the clips supplied from the first supply.

The space between the clips supplied from the first and/or second supply is increased, before the step of forming a single line. When moving the clips into a long side leading position, it is possible to simultaneously increase the space between clips that are consecutively supplied. When the clips are rotated, this increase in space occurs almost automatically, due to the fact that the distance between clips supplied successively does not change. Only the orientation of the clips is changed. For clips that are transported onto a conveyor, without actually rotating the clip, the conveying speed determines the space between clips consecutively supplied. This provides an option of controlling the space between consecutive clips.

According to an aspect of the invention, a tissue clip alignment apparatus for aligning tissue clips according to claim 7 is provided. The use of a second supply makes it possible to increase the amount of clips that can be aligned per time unit, and thus the production of tissue boxes may be increased. The alignment apparatus may comprise a transfer unit for combining the clips supplied by the at least two supplies into a single output line. The transfer unit for combining clips into one single output line makes it possible to relatively easily adapt existing tissue packing apparatuses in line with the invention.

The transfer unit is arranged to rotate clips supplied from the input unit. Rotation of clips may be necessary, for instance for accurate alignment of the clips before packing. The rotation may be relatively small, such as a couple degrees. It is possible however to rotate the clips over a significant angle. Rotating the clips may put them from a short side leading position into a long side leading position, and subsequently may provide room for combining the clips into a single line.

Rotation of the clips may be executed before combining the clips into a single line. However, according to the invention, the transfer unit is arranged for rotating and combining the clips simultaneously. A pusher and stopper apparatus, or the like, is used for pushing and rotating a clip simultaneously. A well performed pushing action may rotate the clip, whilst at the same time provide a space between two successive clips. A stopper device then stops the rotation of the clip, such that a more or less pure pushing action is performed on the clip. With this, two independent line of clips are combined into a single line of clips. It is possible however, to set the stopper in a way that no rotation of clips is achieved. This is beneficial when only a pushing action of the pusher and stopper apparatus is desired. It is possible to temporarily switch off the second supply unit, such that clips are provided from the first supply only. With the apparatus according to the invention, it is relatively easy to switch between existing methods, and embodiments of the method according to the invention. Preferably the pitch of the tissue clips remains unchanged during rotation.

The transfer unit comprises an output conveyor for the output line of tissue clips. This way, the alignment apparatus may easily be connected to an existing cartoning machine, for packing the clips into boxes. In the invention, at least an input conveyor connectable to the second supply, and a transfer mechanism for transferring the clips from the input conveyor to the output conveyor are provided. This way, it is possible to transfer the clips supplied from the second supply towards the output conveyor, and combine the clips with clips supplied from the first supply, to form a single line of clips.

The transfer unit comprises an output conveyor for the output line of tissue clips, wherein the output conveyor is positioned in between two input conveyors connectable to the first and second supply. This placement of the output conveyor is relatively efficient in terms of use of space. The transfer unit may comprise a transfer mechanism for transferring the clips from the input conveyors to the output conveyor. The use of a transfer mechanism allows for a relatively precise placement of clips onto the output conveyor. The input conveyors may be placed essentially parallel to each other, with the output conveyor aligned parallel in between them. The input conveyors and the output conveyor may be placed at the same height. This enables an effective transfer from the input conveyor to the output conveyor. Also, this way a large movable surface is created, the surface being formed by the surface of the central conveyor, and the surfaces of the two input conveyors, which are placed alongside the central conveyor. The large surface may be arranged to move with a uniform speed.

The transfer mechanism comprises a pusher for pushing clips from the input conveyor onto the output conveyor. A pusher is relatively cheap and accurate.

The transfer mechanism comprises a rotating element for rotating tissue clips. This way, the transfer mechanism is arranged to be used in a multifunctional way. The pusher comprises the rotating element, thus combining two functions into one apparatus. The pusher comprises a pointed end, with a plate-like feature placed at a distance thereof. The pointed end is arranged to push a small part of the clip, wherein the part is located at a distance of the center of the clip. The plate like feature will come in contact with the clip later, and will lead to a pure translation, without rotation, of the clip. The transfer mechanism is made of relatively little components. This makes the transfer mechanism relatively cheap and reliable, as maintenance is relatively low.

In an embodiment, the input conveyor is arranged for supplying tissue clips at a first pitch. The output conveyor may be arranged for supporting tissues at a second pitch. The second pitch may generally be equal to half the first pitch. This way, it is possible to increase the amount of clips being processed per time unit by generally a factor two, whilst using the same packing apparatus. This increases the efficiency of the packaging line.

In an embodiment a double supply line is provided on a adjacent sides of an outlet conveyor. In an embodiment two transfer mechanisms are provided at opposite sides of two supply lines arranged to transfer clips from the supply lines towards and partly into each other in order to generally form a single line.

According to another aspect of the invention, a system for cartoning tissue clips is provided as stated in claim 10. With a system according to the invention, it is possible to combine two supplies of clips into a single line. This allows for a dense packing of clips, such that the amount of clips processed per time unit is increased without increasing the actual speed at which clips are conveyed in the system. Therefore, the blow off of tissue sheets from clips is prevented.

In an embodiment, the second tissue clip supply unit is placed alongside the first tissue clip supply unit. Such placement is room efficient. The first and second tissue clip supply units may be arranged for mainly parallel supply of clips to the transfer unit. The parallel supply of clips allows for easy processing of the clips supplied, and allows for relatively easy combination of the clips into a single line.

The transfer unit is arranged to rotate clips supplied from the input unit. Rotation is a relatively easy and accurate method for aligning clips. In addition, by rotating and combining clips of several supplies, a single line of clips may be obtained with a relatively high density of clips. This increases the amount of clips that may be processed per time unit.

The transfer unit comprises an output conveyor for the output line of tissue clips. The transfer unit comprises at least an input conveyor connectable to the second supply. The transfer unit also comprises a transfer mechanism for transferring the clips from the input conveyor to the output conveyor. The first and second supply are connected to the transfer unit. This makes the combination of two supplies of clips into a single line relatively easy. Also, such a connection between the supplies and the transfer mechanism is relatively room efficient.

The output conveyor may be positioned in between two input conveyors connectable to the first and second supply. The transfer unit may comprise a transfer mechanism for transferring the clips from the input conveyors to the output conveyor. Such a set up is also room efficient.

The transfer mechanism comprises a pusher for pushing clips from the input conveyor onto the output conveyor. The pusher is a relatively cheap device, and with it, it is relatively easy to accurately align the clips supplied.

An embodiment of the invention will now be described in more detail with respect to the accompanying figures. It will be understood that the invention is not limited to the embodiment described. In the figures, it is shown:
Fig. 1: A top view of a cartoning line, comprising a cartoning unit and an aligning apparatus according to an embodiment of the present invention;
Fig. 2: A detail of the aligning apparatus of Fig. 1.

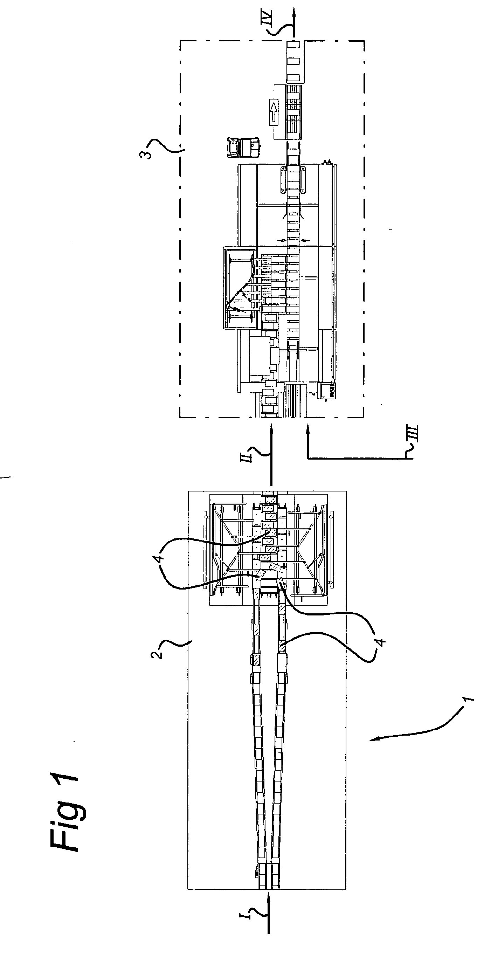

Fig. 1 shows a system 1 for aligning and packing tissue clips 4 into carton boxes. The system 1 comprises a tissue clip input line I for supplying tissue clips, and an output line IV where cartoned tissue clips are conveyed. In between the input line and the output line, an aligning apparatus 2 and a packing apparatus 3 are placed. The aligning apparatus 2 is connected to the packing apparatus 3 through a transporting line II. A box supply line III supplies boxes to the packing apparatus 3.

Tissue clips 4 having a desired dimension are provided to the system 1 via the clip input line I. The clips may be conveyed via, for example, conveyor lines to the aligning apparatus 2, where the clips are aligned and positioned for placement into carton boxes. The clips are then transported towards the packing apparatus 3 by means of the transporting line II. The boxes that the clips need to be placed in, are supplied from the box supply line III to the packing apparatus 3. In the packing apparatus 3, the boxes are aligned with the clips, and the clips are placed inside the carton boxes, in a manner well know to those skilled in the art, e.g. by pushing the clips sideways into the cartons. The carton boxes with tissue clips are then conveyed via the output line IV, after which, for example, the boxes may be stored for transportation.

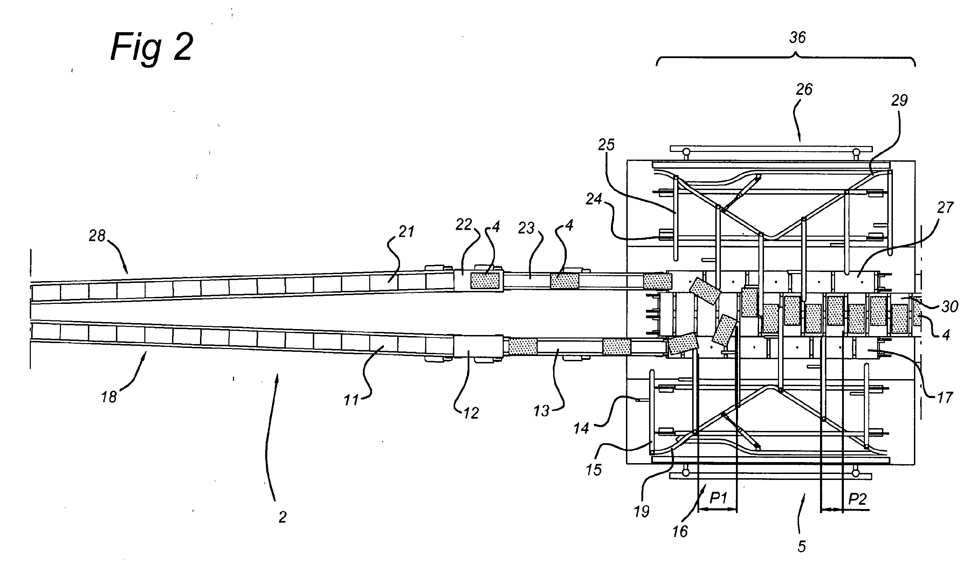

Fig. 2 shows the aligning apparatus 2 according to an embodiment of the invention in more detail. The aligning apparatus comprises a first supply 18. The first supply comprises a conveyor unit 11, which is arranged for transferring clips 4 towards an input unit 5. The input unit comprises a transfer unit 36 for combining the clips 4 supplied into a single output line. To this end, a first input conveyor 17 and a transfer mechanism 16 are provided, for transporting clips 4 supplied from the first supply 18 via an output conveyor 30 towards an output unit. Alongside the first supply 18, a second supply 28 is positioned. In the figure shown, the second supply 28 is positioned mainly parallel to the first supply 18. It is possible however to position the second supply 28 at an angle relative to the first supply 18. For example, it is possible to place the second supply 28 at a right angle with respect to the first supply 18. The second supply 28 also comprises a conveyor unit 21, connected to the input unit 5. The input unit comprises a second conveyor 27 and a transfer mechanism 26 for transporting clips supplied from the second supply 28 via the output conveyor 30 towards an output unit. In between the supply units 18, 28 and the input unit 5, each supply unit has a correction conveyor 12,22 and an acceleration conveyor 13,23.

In the embodiment shown, each transfer mechanism 16, 26 comprises a pusher 15, 25 and a stopper 14, 24. Each pusher comprises a pointed end, such as a bar or rod. At a distance from each pusher, a flat plate is provided. Each pusher 15,25 is slidably connected to a guiding bar 19,29. Each guiding bar 19,29, in the embodiment shown, has a curved, triangular shape, a distance between the guiding bar 19,29 and the conveyor 17,27 being closest near the middle of the input unit 5.

The working mechanism of the aligning apparatus is as follows. Clips are supplied to the aligning apparatus using the conveyors 11, 21 of the two supplies 18, 28. The delivery of clips to the input unit 5 may be such that clips from the two supplies are supplied alternately to the input unit 5. The correction conveyor 12,22 and the acceleration conveyors 13,22 may be used to time the supply of the clips to the input conveyors 17,27.

Two transfer mechanisms 16,26 are positioned at opposite sides of the input conveyors 17,27. The transfer mechanisms are arranged to work oppositely. The transfer mechanisms 16,26 cooperate in order to form a single outlet line.

The transfer mechanisms 16,26 are then used to position the clips in a desired fashion. Each pusher 15,25 and stopper 14, 24 of each transfer mechanism is conveyed alongside each first or second conveyor, and follows the path given by the guiding unit 19, 29 whilst moving. The guiding unit 19, 29 may be formed in any shape desired, to set the path that the pusher and stopper apparatus will follow. In the embodiment shown, the pusher will move towards the clip, and will make contact with the clip at a front end. The pusher will continue to move, thus leading to a rotation of the clip. When the clip is rotated for approximately 90°, the stopper will come into contact with the clip. The stopper is arranged to stop the rotation of the clip, and to align the clip in a desired manner. In the embodiment shown, the pusher and stopper will continue to move further, such that the stopper apparatus will move the clip towards the central conveyor. This way, a translational movement of the clip is obtained. The speed by which the pusher and stopper are conveyed along the conveyors may be equal to the speed of the conveyor, such that each pusher and stopper follows a clip along the conveyor. However, it is possible to vary the speed of the pusher and stopper, dependent on the needs. For example, a lower speed may be used in order to reduce the distance between successive clips.

The correction conveyor 12,22 and the acceleration conveyor 13,23 may be used to adjust the timing of the supply of the clips towards the input unit 5. This makes it possible to tune the two supplies of clips 4, such that an alternating manner of supply is created. The correction conveyor may be used to temporarily hold a clip, thus delaying the supply of the clip, whilst the acceleration conveyor may be used to speed up the clip, to move up the delivery of the clip. A combination of the two is also possible, depending on the needs of the aligning apparatus.

Due to the fact that the clips are transferred to the central conveying unit 30, a single line of clips is formed. In the embodiment shown, the single line is obtained by providing a space between clips consecutively supplied from the first supply 18, and then filling the space by moving clips supplied from the second supply 28 at least partially into the space between the clips supplied from the first supply 18. Alternate embodiments are thinkable however, without deviating from the scope of the claims.

In the embodiment shown, the two supply lines 18,28 supply the clips at the transfer unit 36 at a first pitch P1. The pitch P1 is equal to the distance between the leading edges of two subsequent clips, being transferred on the input conveyor 17,27. In the embodiment shown, the pitch P1 is also equal to the distance between two successive pushers 15,25 for each transfer mechanism 16,26. Then, the two clip lines are combined into a single clip line, having a second pitch P2. Here, the distance between the leading edges of two subsequent clips in line is decreased, thus resulting in a smaller pitch P2. The pitch P2 of the clips is generally equal to half the pitch P1 of the supply lines. However other changes in clip pitches are possible.

In a preferred embodiment the speed of both the supply lines 18,28 is maximized with respect to air friction. The speed of the outlet line II is similar. However due to the smaller pitch, the outlet line will have more clips per minute, preferably about double.

According to the invention, the clips have a long side and a short side, and clips are supplied with their short side leading. During transferring of the clips to the central conveyor unit 30, the clips are rotated to a long side leading position. This may be done by the pushing and stopper apparatus 16,26, although other ways are possible. Due to the rotation, the resulting single line of clips then contains clips with their long side leading. The distance between two successive clips in the single line is such that the space is efficiently used. The conveying speed of the central conveying unit 30 may be equal to the conveying speed of the first 18 and/or second supply 28, although varying the speed of the central conveyor may be beneficial in terms of transfer rates of clips. Since the distance between the clips is decreased on the central conveyor, the amount of clips 4 being transferred by the central conveying unit per time unit is much higher than the amount of clips being supplied by the first or second supply unit.

In another embodiment, the second supply is placed at an angle to the first supply. This angle may be approximately 90°. Such a setup allows for the delivery of a clip from the first supply, and creating a space between clips successively supplied from the first supply. The space between the clips may now be filled by supplying a clip from the second supply. Since the second supply is placed at a right angle, the filling of the space with clips from the second supply may be relatively easy. However, smaller angles are also thinkable, and in that case guiding means may be used for transferring the clips supplied from the second supply into the space between the clips supplied from the first supply.

Other methods of transferring the clips supplied from the second supply at least partially into the space between the clips supplied from the first supply, and forming in essence a single line of clips, are also imaginable. For instance, the second supply may be positioned above the first supply, such that clips supplied from the second supply may be transferred by means of gravity in between the space between clips supplied from the first supply.

It will be understood that various details of the presently disclosed subject matter may be changed without departing from the scope of the invention as defined by the claims. Furthermore, the foregoing description is for the purpose of illustration only, and not for the purpose of limitation.

## Claims

1. Method for aligning tissue clips (4), wherein the clips (4) have a long side and a short side, the method comprising the steps of:
• supplying (I) the clips from a first supply (18) with their short sides leading;
• rotating the clips (4) into a long side leading position, and providing a space between the clips (4) supplied from the first supply (18);
**characterized in that**, the method further comprises the steps of
• supplying clips (4) from a second supply (28) with their short sides leading;
• rotating the clips (4) into a long side leading position, and providing a space between the clips (4) supplied from the second supply (28);
• transferring the clips (4) supplied from the second supply (28) at least partially into the space between the clips (4) supplied from the first supply (18), and forming in essence a single line of clips (4) with increased clip density with respect to the supply lines;
• transporting the single line of clips (4) towards an outlet (30).

2. Method according to claim 1, wherein the first (18) and second (28) supplies supply tissue clips (4) at a first pitch (P1), and wherein the single line (II) of tissue clips transported towards the outlet (30) are transported at a second pitch (P2), wherein the second pitch (P2) is generally equal to half the first pitch (P1).

3. Method according to claim 1 or 2, wherein a speed of the single line (II) of tissue clips (4) towards the outlet (30) is generally equal to the speed of the first (18) and/or the second (28) supply lines.

4. Method according to claim 3, wherein the speed of the single line (II) of clips (4) is in between 330 and 440 clips/min, more preferably equal to approximately 375 clips/min.

5. Method according to any one of the preceding claims, wherein rotating comprises pushing the clips (4) generally sideways to the supply direction.

6. Method according to any one of the preceding claims, wherein a space between the clips (4) supplied from the first (18) and/or second (28) supply is increased, before the step of forming a single line.

7. A tissue clip alignment apparatus (2) for aligning tissue clips (4), wherein the clips (4) have a long side and a short side, wherein the apparatus (2) comprises an input unit (5) connectable to a first supply unit (18) for supplying clips (4) and to at least a second supply unit (28) for supplying clips to the alignment apparatus (2), an output unit (30) for an output line of tissue clips (4) connectable to a downstream processing unit (3), the input (5) and output unit (30) comprising an input conveyor (17, 27) and an output conveyor (30) for supporting clips, wherein the alignment apparatus (2) comprises a transfer unit (36) for combining the clips supplied by the at least two supplies (18, 28) into a single output line, wherein the transfer unit (36) is arranged to rotate clips supplied from the input unit (5) into a long side leading position, wherein the transfer unit (36) comprises a transfer mechanism (26) for transferring the clips from the input conveyor (17, 27) to the output conveyor (30), wherein the transfer unit (36) is arranged for simultaneously rotating and combining tissue clips (4) supplied from two input lines (18, 28) in order to obtain a single output line (30) of tissue clips (4) with their long sides leading, wherein the transfer unit (36) comprises a transfer mechanism (16, 26) comprising a pusher (25) for pushing tissue clips (4) from the input conveyor (17,27) onto the output conveyor (30) and a rotating element for rotating tissue clips (4), **characterized in that** the pusher (25) comprises the rotating element, wherein the pusher (25) comprises a pointed end with a plate-like feature placed at a distance thereof, wherein the pointed end is arranged to push a small part of the tissue clip (4) that is located at a distance from the center of the tissue clip (4), wherein the plate like feature is arranged to contact the tissue clip (4) later, such that the tissue clip (4) only translates.

8. A tissue clip alignment apparatus (2) according to claim 7, wherein the input conveyor (17, 27) is arranged for supplying tissue clips (4) at a first pitch (P1) and wherein the output conveyor (30) is arranged for supporting tissue clips at a second pitch (P2), wherein the second pitch (P2) is generally equal to half the first pitch (P1).

9. A tissue clip alignment apparatus according to claim 7 or 8, wherein the transfer unit (36) comprises an output conveyor (30) for the output line of tissue clips (4) positioned in between two input conveyors (17,27) connectable to the first (18) and second supply (28), and wherein a transfer mechanism (16,26) is arranged for transferring the clips from the input conveyors (17,27) to the output conveyor (30).

10. System (1) for aligning and packing tissue clips (4) into carton boxes, wherein the clips (4) have a long side and a short side, wherein the system comprises a first and a second tissue clip input line (I) for supplying tissue clips with their short side leading, the input lines connected to an aligning apparatus (2) for aligning tissue clips, a packing apparatus (3) connected to the aligning apparatus (2) for packing tissue clips (4) into carton boxes, and an outlet line (30) connected to the packing apparatus, wherein the system is arranged for simultaneously rotating and combining tissue clips (4) supplied from two input lines (18, 28) in order to obtain a single out ut line (30) of tissue clips (4) with their long sides leading, wherein the alignment apparatus (2) comprises a transfer unit (36) comprising a transfer mechanism (16, 26) that comprising a pusher (25) for pushing clips from the input conveyor (17,27) onto the output conveyor (30) and a rotating element for rotating tissue clips (4), **characterized in that** the pusher (25) comprises the rotating element, wherein the pusher (25) comprises a pointed end with a plate-like feature placed at a distance thereof, wherein the pointed end is arranged to push a small part of the tissue clip (4) that is located at a distance from the center of the tissue clip (4), wherein the plate like feature is arranged to contact the tissue clip (4) later, such that the tissue clip (4) only translates.

11. System according to claim 10, wherein the second tissue clip supply unit (28) is placed alongside the first tissue clip supply unit (18), wherein the tissue clip supply units (18,28) are arranged for mainly parallel supply of clips to the transfer unit (36).

## Patentansprüche

1. Verfahren zur Ausrichtung von Papiertaschentuchpackstücken (4), wobei die Packstücke (4) eine lange Seite und eine kurze Seite haben, wobei das Verfahren die folgenden Schritte aufweist:
- Zuführen (I) der Packstücke von einer ersten Zuführung (18) mit ihren kurzen Seiten voraus;
- Drehen der Packstücke (4) in eine Position, in der die lange Seite voraus ist, und Bereitstellen eines Raums zwischen den Packstücken (4), die von der ersten Zuführung (18) zugeführt werden,
**dadurch gekennzeichnet, dass** das Verfahren ferner die folgenden Schritte aufweist:
- Zuführen von Packstücken (4) von einer zweiten Zuführung (28) mit ihren kurzen Seiten voraus;
- Drehen der Packstücke (4) in eine Position, in der die lange Seite voraus ist, und Bereitstellen eines Raums zwischen den Packstücken (4), die von der zweiten Zuführung (28) zugeführt werden;
- Überführen der Packstücke (4), die von der zweiten Zuführung (28) zugeführt werden, wenigstens teilweise in den Raum zwischen den Packstücken (4), die von der ersten Zuführung (18) zugeführt werden, und Bilden von im Wesentlichen einer einzigen Leitung mit Packstücken (4) mit in Bezug auf die Zuführungsleitungen erhöhter Packstückdichte;
- Transportieren der einzigen Leitung mit Packstücken (4) in Richtung eines Auslasses (30).

2. Verfahren nach Anspruch 1, wobei die ersten (18) und zweiten (28) Zuführungen Papiertaschentuchpackstücke (4) in einem ersten Abstandsmaß (P1) zuführen, und wobei die einzige Leitung (II) mit Papiertaschentuchpackstücken, die in Richtung des Auslasses (30) transportiert werden, in einem zweiten Abstandsmaß (P2) transportiert werden, wobei das zweite Abstandsmaß (P2) im Allgemeinen gleich der Hälfte des ersten Abstandsmaßes (P1) ist.

3. Verfahren nach Anspruch 1 oder 2, wobei eine Geschwindigkeit der einzigen Leitung (II) mit Papiertaschentuchpackstücken (4) in Richtung des Auslasses (30) im Allgemeinen gleich der Geschwindigkeit der ersten (18) und/oder zweiten (28) Zuführungsleitungen ist.

4. Verfahren nach Anspruch 3, wobei die Geschwindigkeit der einzigen Leitung (II) mit Packstücken (4) zwischen 330 und 440 Packstücke/Min, vorzugsweise gleich ungefähr 375 Packstücke/Min liegt.

5. Verfahren nach einem der vorhergehenden Ansprüche, wobei das Drehen das Schieben der Packstücke (4) im Allgemeinen seitwärts zu der Zuführungsrichtung aufweist.

6. Verfahren nach einem der vorhergehenden Ansprüche, wobei ein Raum zwischen den Packstücken (4), die von der ersten (18) und/oder zweiten (28) Zuführung zugeführt werden, vor dem Schritt des Bildens einer einzigen Leitung vergrößert wird.

7. Vorrichtung (2) zur Ausrichtung von Papiertaschentuchpackstücken (4), wobei die Packstücke (4) eine lange Seite und eine kurze Seite haben, wobei die Vorrichtung (2) aufweist,: eine Eingangseinheit (5), die mit der ersten Zuführungseinheit (18) verbindbar ist, zum Zuführen von Packstücken (4) und wenigstens eine zweite Zuführungseinheit (28) zum Zuführen von Packstücken an die Ausrichtungsvorrichtung (2), eine Ausgangseinheit (30) für eine Ausgangsleitung von Papiertaschentuchpackstücken (4), die mit einer laufabwärtigen Verarbeitungseinheit (3) verbindbar ist, wobei die Eingangs- (5) und Ausgangseinheit (30) ein Eingangsförderband (17, 27) und ein Ausgangsförderband (30) zum Halten von Packstücken aufweisen, wobei die Ausrichtungsvorrichtung (2) eine Überführungseinheit (36) zum Kombinieren der Packstücke, die von den wenigstens zwei Zuführungen (18, 28) geliefert werden, in eine einzige Ausgangsleitung aufweist, wobei die Überführungseinheit (36) angeordnet ist, um Packstücke, die von der Eingangseinheit (5) zugeführt werden, in eine Position, in der die lange Seite voraus ist, zu drehen, wobei die Überführungseinheit (36) einen Überführungsmechanismus (26) zum Überführen der Packstücke von dem Eingangsförderband (17, 27) zu dem Ausgangsförderband (30) aufweist, wobei die Überführungseinheit (36) eingerichtet ist, um die Papiertaschentuchpackstücke (4), die von zwei Eingangsleitungen (18, 28) zugeführt werden, gleichzeitig zu drehen und zu kombinieren, um eine einzige Ausgangsleitung (30) mit Papiertaschentuchpackstücken(4) mit ihren kurzen Seiten voraus zu erhalten, wobei die Überführungseinheit (36) einen Überführungsmechanismus (16, 26) aufweist, der einen Schieber (25) zum Schieben von Papiertaschentuchpackstücken (4) von dem Eingangsförderband (17, 27) auf das Ausgangsförderband (30) und ein Drehelement zum Drehen der Papiertaschentuchpackstücke (4) aufweist, **dadurch gekennzeichnet, dass** der Schieber (25) das Drehelement aufweist, wobei der Schieber (25) ein spitzes Ende mit einem plattenähnlichen Merkmal, das in einem Abstand davon angeordnet ist, aufweist, wobei das spitze Ende eingerichtet ist, um einen kleinen Teil des Papiertaschentuchpackstücks (4), der in einem Abstand von der Mitte des Papiertaschentuchpackstücks (4) angeordnet ist, zu schieben, wobei das plattenähnliche Merkmal angeordnet ist, um das Papiertaschentuchpackstück (4) später zu berühren, so dass das Papiertaschentuchpackstück (4) sich nur verschiebt.

8. Vorrichtung (2) zur Ausrichtung von Papiertaschentuchpackstücken nach Anspruch 7, wobei das Eingangsförderband (17, 27) angeordnet ist, um Papiertaschentuchpackstücke (4) in einem ersten Abstandsmaß (P1) zu zuführen, und wobei das Ausgangsförderband (30) angeordnet ist, um Papiertaschentuchpackstücke in einem zweiten Abstandsmaß (P2) zu halten, wobei das zweite Abstandsmaß (P2) im Allgemeinen gleich der Hälfte des ersten Abstandsmaßes (P1) ist.

9. Vorrichtung zur Ausrichtung von Papiertaschentuchpackstücken nach Anspruch 7 oder 8, wobei die Überführungseinheit (36) ein Ausgangsförderband (30) für die Ausgangsleitung für die Papiertaschentuchpackstücke (4) aufweist, das zwischen zwei Eingangsförderbändern (17, 27) positioniert ist, die mit der ersten (18) und zweiten (28) Zuführung verbindbar sind, und wobei ein Überführungsmechanismus (16, 26) eingerichtet ist, um die Packstücke von den Eingangsförderbändern (17, 27) auf das Ausgangsförderband (30) zu überführen.

10. System (1) zur Ausrichtung und Verpackung von Papiertaschentuchpackstücken (4) in Kartons, wobei die Papiertaschentuchpackstücke (4) eine lange Seite und eine kurze Seite haben, wobei das System aufweist: eine erste und eine zweite Papiertaschentuchpackstück-Eingangsleitung (I) zum Zuführen von Papiertaschentuchpackstücken mit ihrer kurzen Seite voraus, wobei die Eingangsleitungen mit einer Ausrichtungsvorrichtung (2) zur Ausrichtung von Papiertaschentuchpackstücken verbunden sind, eine Verpackungsvorrichtung (3), die mit der Ausrichtungsvorrichtung (2) verbunden ist, um Papiertaschentuchpackstücke (4) in Kartons zu verpacken, und eine Auslassleitung (30), die mit der Verpackungsvorrichtung verbunden ist, wobei das System eingerichtet ist, um Papiertaschentuchpackstücke (4), die von zwei Eingangsleitungen (18, 28) zugeführt werden, gleichzeitig zu drehen und zu kombinieren, um eine einzige Ausgangsleitung (30) mit Papiertaschentuchpackstücken (4) mit ihren langen Enden voraus zu erhalten, wobei die Ausrichtungsvorrichtung (2) eine Überführungseinheit (36) aufweist, die einen Überführungsmechanismus (16, 26) aufweist, der einen Schieber (25) zum Schieben von Packstücken von dem Eingangsförderband (17, 27) auf das Ausgangsförderband (30) und ein Drehelement zum Drehen der Papiertaschentuchpackstücke (4) aufweist, **dadurch gekennzeichnet, dass** der Schieber (25) das Drehelement aufweist, wobei der Schieber (25) ein spitzes Ende mit einem plattenähnlichen Merkmal, das in einem Abstand davon angeordnet ist, aufweist, wobei das spitze Ende eingerichtet ist, um einen kleinen Teil des Papiertaschentuchpackstücks (4), der in einem Abstand von der Mitte des Papiertaschentuchpackstücks (4) angeordnet ist, zu schieben, wobei das plattenähnliche Merkmal angeordnet ist, um das Papiertaschentuchpackstück (4) später zu berühren, so dass das Papiertaschentuchpackstück (4) sich nur verschiebt.

11. System nach Anspruch 10, wobei die zweite Zuführungseinheit (28) für Papiertaschentuchpackstücke neben der ersten Zuführungseinheit (18) für Papiertaschentuchpackstücke angeordnet ist, wobei die Zuführungseinheiten (18, 28) für Papiertaschentuchpackstücke für die hauptsächlich parallele Zuführung von Packstücken an die Überführungseinheit (36) angeordnet sind.

## Revendications

1. Procédé pour aligner des paquets de mouchoirs en papier (4), dans lequel les paquets (4) possèdent un côté long et un côté court, le procédé comprenant les étapes consistant à :
- distribuer (I) les paquets à partir d'une première alimentation (18) avec leurs côtés courts en premiers ;
- faire tourner les paquets (4) dans une position avec le côté long en premier, et fournir un espace entre les paquets (4) distribués à partir de la première alimentation (18) ;
**caractérisé en ce que**, le procédé comprend en outre les étapes consistant à :
- distribuer des paquets (4) à partir d'une seconde alimentation (28) avec leurs côtés courts en premiers ;
- faire tourner les paquets (4) dans une position avec le côté long en premier, et fournir un espace entre les paquets (4) distribués à partir de la seconde alimentation (28) ;
- transférer les paquets (4) distribués à partir de la seconde alimentation (28) au moins partiellement dans l'espace entre les paquets (4) distribués à partir de la première alimentation (18), et former en essence une chaîne unique de paquets (4) avec une densité augmentée de paquets par rapport aux chaînes d'alimentation ;
- transporter la chaîne unique de paquets (4) vers une sortie (30).

2. Procédé selon la revendication 1, dans lequel les première (18) et seconde (28) alimentations distribuent des paquets de mouchoirs en papier (4) à un premier pas (P1), et dans lequel la chaîne unique (II) de paquets de mouchoirs en papier transportés vers la sortie (30) est transportée à un second pas (P2), dans lequel le second pas (P2) est généralement égal à la moitié du premier pas (P1).

3. Procédé selon la revendication 1 ou 2, dans lequel une vitesse de la chaîne unique (II) de paquets de mouchoirs en papier (4) vers la sortie (30) est généralement égale à la vitesse de la première (18) et/ou la seconde (28) chaînes d'alimentation.

4. Procédé selon la revendication 3, dans lequel la vitesse de la chaîne unique (II) de paquets (4) est entre 330 et 440 paquets/min, de préférence égale à approximativement 375 paquets/min.

5. Procédé selon une quelconque des revendications précédentes, dans lequel l'étape consistant à faire tourner comprend l'étape consistant à pousser les paquets (4) de façon généralement latérale à la direction d'alimentation.

6. Procédé selon une quelconque des revendications précédentes, dans lequel un espace entre les paquets (4) distribués à partir des première (18) et/ou seconde (28) alimentations est augmenté, avant l'étape consistant à former une chaîne unique.

7. Appareil d'alignement de paquets de mouchoirs en papier (2) pour aligner des paquets de mouchoirs en papier (4), dans lequel les paquets (4) possèdent un côté long et un côté court, dans lequel l'appareil (2) comprend une unité d'entrée (5) pouvant être raccordée à une première unité d'alimentation (18) pour distribuer des paquets (4) et à au moins une seconde unité d'alimentation (28) pour distribuer des paquets à l'appareil d'alignement (2), une unité de sortie (30) pour une chaîne de sortie des paquets de mouchoirs en papier (4) pouvant être raccordée à une unité de traitement en aval (3), les unités d'entrée (5) et de sortie (30) comprenant un transporteur d'entrée (17, 27) et un transporteur de sortie (30) pour supporter des paquets, dans lequel l'appareil d'alignement (2) comprend une unité de transfert (36) pour combiner les paquets distribués par les au moins deux alimentations (18, 28) en une chaîne de sortie unique, dans lequel l'unité de transfert (36) est agencée pour faire tourner des paquets distribués à partir de l'unité d'entrée (5) dans une position avec le côté long en premier, dans lequel l'unité de transfert (36) comprend un mécanisme de transfert (26) pour transférer les paquets du transporteur d'entrée (17, 27) au transporteur de sortie (30), dans lequel l'unité de transfert (36) est agencée pour simultanément faire tourner et combiner des paquets de mouchoirs en papier (4) distribués à partir de deux chaînes d'entrée (18, 28) afin d'obtenir une chaîne de sortie unique (30) de paquets de mouchoirs en papier (4) avec leurs côtés longs en premiers, dans lequel l'unité de transfert (36) comprend un mécanisme de transfert (16, 26) comprenant un poussoir (25) pour pousser des paquets de mouchoirs en papier (4) à partir du transporteur d'entrée (17, 27) sur le transporteur de sortie (30) et un élément rotatif pour faire tourner des paquets de mouchoirs en papier (4), **caractérisé en ce que** le poussoir (25) comprend l'élément rotatif, dans lequel le poussoir (25) comprend une extrémité pointue avec un accessoire en forme de plaque positionné à une distance de celui-ci, dans lequel l'extrémité pointue est agencée pour pousser une petite partie du paquet de mouchoirs en papier (4) qui est positionnée à une distance du centre du paquet de mouchoirs en papier (4), dans lequel l'accessoire en forme de plaque est agencé pour entrer en contact avec le paquet de mouchoirs en papier (4) ultérieurement, de sorte que le paquet de mouchoirs en papier (4) seulement se translate.

8. Appareil d'alignement de paquets de mouchoirs en papier (2) selon la revendication 7, dans lequel le transporteur d'entrée (17, 27) est agencé pour distribuer des paquets de mouchoirs en papier (4) à un premier pas (P1) et dans lequel le transporteur de sortie (30) est agencé pour supporter des paquets de mouchoirs en papier à un second pas (P2), dans lequel le second pas (P2) est généralement égal à la moitié du premier pas (P1).

9. Appareil d'alignement de paquets de mouchoirs en papier selon la revendication 7 ou 8, dans lequel l'unité de transfert (36) comprend un transporteur de sortie (30) pour la chaîne de sortie de paquets de mouchoirs en papier (4), positionné entre deux transporteurs d'entrée (17, 27) pouvant être raccordés aux première (18) et seconde (28) alimentations, et dans lequel un mécanisme de transfert (16, 26) est agencé pour transférer les paquets du transporteur d'entrée (17, 27) au transporteur de sortie (30).

10. Système (1) pour aligner et emballer des paquets de mouchoirs en papier (4) dans des boîtes en carton, dans lequel les paquets (4) possèdent un côté long et un côté court, dans lequel le système comprend des première et seconde chaînes d'entrée de paquets de mouchoirs en papier (I) pour distribuer des paquets de mouchoirs en papier avec leur côté court en premier, les chaînes d'entrée étant raccordées à un appareil d'alignement (2) pour aligner des paquets de mouchoirs en papier, un appareil d'emballage (3) raccordé à l'appareil d'alignement (2) pour emballer des paquets de mouchoirs en papier (4) dans des boîtes en carton, et une chaîne de sortie (30) raccordée à l'appareil d'emballage, dans lequel le système est agencé pour simultanément faire tourner et combiner des paquets de mouchoirs en papier (4) distribués à partir de deux chaînes d'entrée (18, 28) afin d'obtenir une chaîne de sortie unique (30) de paquets de mouchoirs en papier (4) avec leurs côtés longs en premiers, dans lequel l'appareil d'alignement (2) comprend une unité de transfert (36) comprenant un mécanisme de transfert (16, 26) qui comprend un poussoir (25) pour pousser des paquets à partir du transporteur d'entrée (17, 27) sur le transporteur de sortie (30) et un élément rotatif pour faire tourner des paquets de mouchoirs en papier (4), **caractérisé en ce que** le poussoir (25) comprend l'élément rotatif, dans lequel le poussoir (25) comprend une extrémité pointue avec un accessoire en forme de plaque positionné à une distance de celui-ci, dans lequel l'extrémité pointue est agencée pour pousser une petite partie du paquet de mouchoirs en papier (4) qui est positionnée à une distance du centre du paquet de mouchoirs en papier (4), dans lequel l'accessoire en forme de plaque est agencé pour entrer en contact avec le paquet de mouchoirs en papier (4) ultérieurement, de sorte que le paquet de mouchoirs en papier (4) seulement se translate.

11. Système selon la revendication 10, dans lequel la seconde unité d'alimentation en paquets de mouchoirs en papier (28) est positionnée à côté de la première unité d'alimentation en paquets de mouchoirs en papier (18), dans lequel les unités d'alimentation en paquets de mouchoirs en papier (18, 28) sont agencées pour distribuer des paquets, de façon essentiellement parallèle, à l'unité de transfert (36).
